(19) Europäisches Patentamt
European Patent Office
Office européen des brevets

(11) Publication number: **0 202 119 B1**

# (12) EUROPEAN PATENT SPECIFICATION

(45) Date of publication of patent specification: **29.07.92**

(51) Int. Cl.⁵: **H01J 29/89**, H01J 9/24

(21) Application number: **86303675.2**

(22) Date of filing: **14.05.86**

## (54) Projection-type cathode ray tubes.

(30) Priority: **15.05.85 JP 102936/85**

(43) Date of publication of application:
**20.11.86 Bulletin 86/47**

(45) Publication of the grant of the patent:
**29.07.92 Bulletin 92/31**

(84) Designated Contracting States:
**GB IT NL**

(56) References cited:
**EP-A- 0 206 812**
**JP-A- 6 032 237**

**Patent Abstracts of Japan,unexamined applications, E field,vol. 7,no. 8, January 13, 1983.The Patent Office Japanese Government, page 5 E 152**

**Patent Abstracts of Japan, unexamined applications, E field, vol. 8,no. 78, April 10, 1984.The Patent Office Japanese Government, page 71 E 237.**

(73) Proprietor: **SONY CORPORATION**
**7-35 Kitashinagawa 6-chome Shinagawa-ku**
**Tokyo 141(JP)**

(72) Inventor: **Chiba, Tomosuke**
**c/o Sony Corporation 6-7-35 Kitashinagawa**
**Shinagawa-ku Tokyo 141(JP)**
Inventor: **Ozawa, Satoshi**
**c/o Sony Corporation 6-7-35 Kitashinagawa**
**Shinagawa-ku Tokyo 141(JP)**

(74) Representative: **Thomas, Christopher Hugo et al**
**D Young & Co 10 Staple Inn**
**London WC1V 7RD(GB)**

**EP 0 202 119 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to projection-type cathode ray tubes and to methods of making such cathode ray tubes.

There is known a projection cathode ray tube system, also known as a video projection system, which includes a projection-type cathode ray tube, an optical system including a lens assembly, and a viewing screen onto which an enlarged image of the image on the cathode ray tube is projected by the optical system. The projection-type cathode ray tube must necessarily be of high brightness, so is driven by a voltage and a current which are higher than normally used in the cathode ray tube of an ordinary television receiver. Some cooling means has to be provided for such a projection-type cathode ray tube, because otherwise lowering of the light emission efficiency of the phosphor material and/or the destruction of the front panel of the cathode ray tube due to thermal stress may be caused by the substantial rise in temperature which occurs. In one previously proposed liquid-cooled projection-type cathode ray tube, a glass plate is placed in front of the front panel of the cathode ray tube through the intermediary of a metallic frame which provides a sealed coolant space defined by the glass plate, the front panel, and the frame. Heat convection in the coolant and heat radiation from the metallic frame provide a substantial cooling effect.

However, such a liquid-cooled cathode ray tube has the drawback that an air layer is necessarily interposed between the glass plate and the lens assembly which is disposed in front of the glass plate, resulting in a light loss due to differential refraction and the tendency of dust and dirt to become deposited on the glass plate and/or on the lens assembly.

To overcome this, it has been proposed that the lens of the lens assembly which is closest to the cathode ray tube be used in place of the glass plate and be directly affixed to the cathode ray tube. This lens is preferably formed of an acrylic resin, in order to reduce the cost and the weight. However, there has not been developed a suitable technique for bonding a lens of acrylic resin to the metallic frame. For example, when the lens is bonded to the metallic frame using a silicone adhesive, the adhesive strength is poor, and there is a tendency for the coolant to leak.

According to the present invention there is provided a method of making a projection-type cathode ray tube assembly having a front face of a cathode ray tube on which are produced images for projection through a lens system, the method comprising:

providing a metallic frame having a rear edge fitting about the periphery of said front face and a front edge spaced from said rear edge thereby providing a space for coolant therebetween; and

providing an acrylic lens as part of said lens system, said lens having a rear surface proportioned to be received against said front edge of said metallic frame to provide sealing engagement therebetween;

characterised by:

applying an organo-polysiloxane coating onto the portion of said rear surface of said lens which is to contact said front edge of said metallic frame; and

thereafter bonding said lens to said metallic frame with a silicone adhesive.

According to the present invention there is also provided a projection-type cathode ray tube assembly comprising:

a cathode ray tube having a front panel having phosphors on the rear face thereof;

a metallic frame having a rear edge fitting against the periphery of the front face of said front panel; and

an acrylic lens positioned in front of said metallic frame;

characterised by:

a coating of an organo-polysiloxane on the portion of said lens which faces said front panel; and

a silicone adhesive adhered to said coating and bonding said lens to the front of said metallic frame.

Thus, the present invention provides a method of producing a projection-type cathode ray tube wherein a lens formed of an acrylic resin is provided on the front surface of a front panel of the cathode ray tube with the interposition of a metallic frame. Coolant is sealed within the free space region defined by the front panel, the metallic frame, and the acrylic lens. The method involves applying an organo-polysiloxane coating on the surface of the acrylic lens which is to be in contact with the metallic frame. After application of the coating, the acrylic lens is bonded to the metallic frame by means of a silicone adhesive. This results in an improved bonding between the lens and the metallic frame.

The invention will now be described by way of example with reference to the accompanying drawings, throughout which like parts are referred to by like references, and in which:

Figure 1 is a view partly in elevation and partly in cross-section of an embodiment of projection-type cathode ray tube according to the present invention and Figure 1A shows an enlarged portion thereof;

Figure 2 is a rear view illustrating more specifically a lens of acrylic resin shown in Figure 1; and

Figure 3 is a side elevational view of a lens assembly.

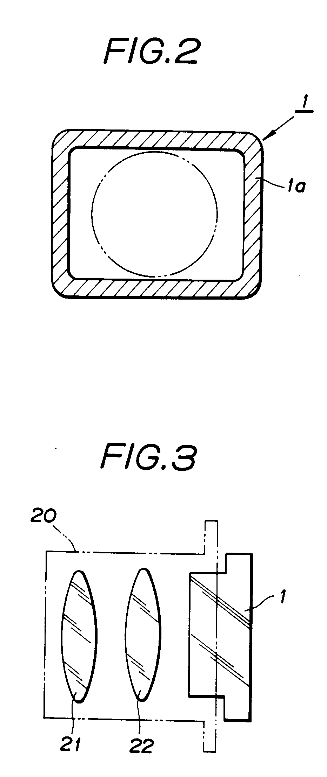

Referring to Figure 1, a lens 1 of acrylic resin (for example methyl methacrylate resin) is proportioned to be affixed at its rear surface to a metallic frame 2, such as an aluminium frame, which acts as a spacer. On the peripheral area 1a, indicated by the cross-hatching lines in Figure 2, which is to contact the metallic frame 2, there is first applied an organopolysiloxane coating 11 shown in Figure 1A, of about 2 to 5 $\mu$m in thickness. The coating 11 may, for example, consist of a coating material manufactured and sold by the Shin-etsu Chemical Industry Co., Ltd. under the trade name X-12-1100AB, which is a two-solution type resin, or X-12-2206 which is a one-solution type resin.

The organo-polysiloxane coating is a polymerized polysiloxane of the block polymer type having the following repeating units.

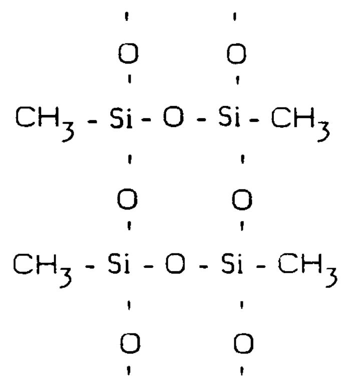

The coating 11 applied to the portion of the lens 1 which faces the front panel of the cathode ray tube is dried at room temperature for about thirty minutes to evaporate the alcohol solvent contained in the coating 11. During drying, the relative humidity is maintained at below 50%. The thus treated coating 11 is allowed to stand for about two hours in an atmosphere at about 80°C for drying, and is then cooled.

Using silicone adhesive 12 about 0.4 to 10 mm in thickness, the lens 1 and the metallic frame 2 are bonded to each other, with the previously applied organo-polysiloxane coating 11 forming a bonding surface for the adhesive 12 with which it is in contact.

Then, the metallic frame 2 and a front panel 3b of a cathode ray tube 3, having a phosphor surface 3a on the rear thereof are also bonded to each other as shown in Figure 1.

As the silicone adhesive 12, for example, may be used the adhesive manufactured and sold by the Shin-etsu Chemical Industry Co., Ltd. under the trade name of KE-1802ABC.

The adhesive 12 is a cross-linked dimethylpolysiloxane having the following repeating groups:

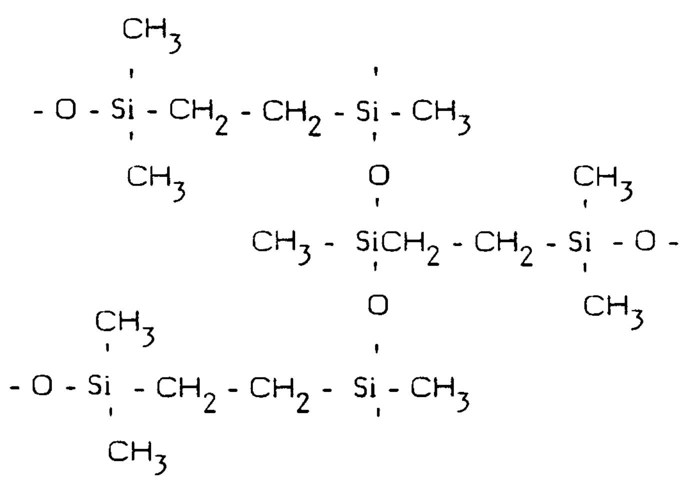

The unit thus assembled is allowed to stand for about three hours in an atmosphere at about 90°C for curing the adhesive 12. The unit is then permitted to cool.

Subsequently, a coolant CL is introduced by way of an injection inlet port 2a into a free space region 10 which is defined by the front panel 3b, the metallic frame 2 and the lens 1. As the coolant CL, may, for

example, be used an aqueous solution of ethylene glycol. It should be noted that the free space region 10 is not completely filled with the coolant CL, but a layer of air AI is left in order to prevent flexure of the front panel 3b and of the lens 1 from occurring when the coolant CL expands due to a rise in temperature. In this manner, it is possible to prevent the distance between the front panel 3b and the lens 1 from changing.

As shown in Figure 3, the lens 1 forms part of a lens assembly including a plurality of other lenses 21 and 22 disposed in a tube 20, and in the path of light passing from the lens 1 onto the projection screen (not shown).

The strength of the adhesive 12 between the lens 1 and the metallic frame 2, and the leakage of coolant CL were measured with test units. Embodiment units comprised a lens and a metallic frame bonded together, and filled with coolant as described above using the organo-polysiloxane coating as previously described. These embodiment units were compared with comparative units in which the organo-polysiloxane coating was omitted. The results are shown in Table 1, wherein the adhesive strength means the shearing adhesive strength, and the liquid leakage is determined as the weight of leaked material after 100 hours of operation at 80 ° C. An aluminium frame was used as the metallic frame 2, and the coating "X-12-1100AB" manufactured and sold by the Shin-etsu Chemical Industry Co., Ltd. was used as the organo-polysiloxane coating. The adhesive was of the type known as "KE-1802ABC" manufactured and sold by the SHin-etsu Chemical Industry Co., Ltd. The conditions of drying of the coating and curing of the adhesive were those described above. The coolant was an 80% aqueous solution of ethylene glycol. The initial charge of coolant was 38.5 g.

TABLE 1

| | Adhesive Strength ($kg/cm^2$) | Liquid Leakage (g) |
|---|---|---|
| Comparative units | 0.9 | 5.1 |
| Embodiment units | 8.0 | 0.17 |

It will be seen from this Table that when the organo-polysiloxane coating agent is used as a pretreating agent, the acrylic lens and the metallic frame are bonded together firmly and leakage of the coolant is reduced.

With the embodiment of projection-type cathode ray tube described, no dust and dirt become deposited on the surface of the front panel 3b of the cathode ray tube 3 or on the surface of the acrylic lens 1 facing the front panel 3b, so that reduction in the brightness of the cathode ray tube, or deterioration of its white balance on the projection plane are generally prevented. In addition, the effect of heat radiation caused by the metallic frame 2 is also superior, so that there is no risk of destruction of the front panel 3b from stress or deformation of the acrylic lens 1 due to thermal stress.

## Claims

**1.** A method of making a projection-type cathode ray tube assembly having a front face (3b) of a cathode ray tube (3) on which are produced images for projection through a lens system, the method comprising:
providing a metallic frame (2) having a rear edge fitting about the periphery of said front face (3b) and a front edge spaced from said rear edge thereby providing a space (10) for coolant therebetween; and
providing an acrylic lens (1) as part of said lens system, said lens (1) having a rear surface proportioned to be received against said front edge of said metallic frame (2) to provide sealing engagement therebetween;
characterised by:
applying an organo-polysiloxane coating (11) onto the portion (1a) of said rear surface of said lens (1) which is to contact said front edge of said metallic frame (2); and
thereafter bonding said lens (1) to said metallic frame (2) with a silicone adhesive (12).

**2.** A method according to claim 1 which comprises:
drying said lens (1) after application of said organo-polysiloxane coating (11) thereto at substantially room temperature;
further drying the thus coated lens (1) in a high temperature atmosphere; and
bonding the thus treated lens (1) to said metallic frame (2) with said silicone adhesive (12) in contact

with the dried coating (11) of said organ-opolysiloxane.

**3.** A method according to claim 1 or claim 2 which includes the step of introducing an aqueous solution of ethylene glycol (CL) into said space (10).

**4.** A method according to claim 3 wherein said space (10) is incompletely filled with said coolant (CL), thereby accommodating thermal expansion of said coolant (CL) in said space (10).

**5.** A projection-type cathode ray tube assembly comprising:
a cathode ray tube (3) having a front panel (3b) having phosphors on the rear face (3a) thereof;
a metallic frame (2) having a rear edge fitting against the periphery of the front face of said front panel (3b); and
an acrylic lens (1) positioned in front of said metallic frame (2);
characterised by:
a coating (11) of an organo-polysiloxane on the portion of said lens (1) which faces said front panel (3b); and
a silicone adhesive (12) adhered to said coating (11) and bonding said lens (1) to the front of said metallic frame (2).

**6.** An assembly according to claim 5 wherein the space (10) between said acrylic lens (1) and said front panel (3b) is partially filled with a liquid coolant (CL).

**7.** An assembly according to claim 5 or claim 6 which includes inlet means (2a) in said metallic frame (2) for introducing a liquid coolant (CL) into the space (10) between said acrylic lens (1) and said front panel (3b).

**8.** An assembly according to claim 5, claim 6 or claim 7 which also includes a plurality of lenses (21,22) disposed forwardly of said acrylic lens (1) in the direction of light projection from said cathode ray tube (3).

**Revendications**

**1.** Procédé de fabrication d'une unité de tube à rayons cathodiques du type pour projection possédant une face frontale (3b) d'un tube à rayons cathodiques (3) sur laquelle sont produites des images pour projection à travers un système de lentilles, le procédé comprenant :
la fourniture d'un cadre métallique (2) ayant un bord arrière s'ajustant sur la périphérie de ladite face frontale (3b) et un bord avant distant dudit bord arrière, ménageant ainsi un espace (10) où intercaler un agent réfrigérant ; et
la fourniture d'une lentille acrylique (1) faisant partie dudit système de lentilles, ladite lentille (1) ayant une surface arrière dimensionnée de façon à reposer contre ledit bord avant dudit cadre métallique (2) de façon à fournir un emboîtement hermétique entre les pièces ;
caractérisé par :
l'application d'un revêtement (11) en organo-polysiloxane sur la partie (1a) de ladite surface arrière de ladite lentille (1) qui doit entrer en contact avec ledit bord avant dudit cadre métallique (2) ; et
le collage subséquent de ladite lentille (1) audit cadre métallique (2) à l'aide d'un adhésif siliconé (12).

**2.** Procédé selon la revendication 1, comprenant :
le séchage de ladite lentille (1) après l'application dudit revêtement (11) en organo-polysiloxane sur cette dernière, a une température sensiblement égale à la température ambiante ;
le séchage ultérieur de la lentille (1) ainsi revêtue dans une atmosphère à haute température ; et
le collage de la lentille (1) ainsi traitée audit cadre métallique (2) par ledit adhésif siliconé (12) en contact avec le revêtement (11) séché en ledit organo-polysiloxane.

**3.** Procédé selon la revendication 1 ou la revendication 2, comprenant l'étape consistant à introduire une solution aqueuse d'éthylèneglycol (CL) dans ledit espace (10).

**4.** Procédé selon la revendication 3, dans lequel ledit espace (10) n'est pas totalement empli par ledit

agent réfrigérant (CL), permettant ainsi l'expansion thermique dudit réfrigérant (CL) dans ledit espace (10).

**5.** Unité de tube à rayons cathodiques du type pour projection comprenant :
un tube à rayons cathodiques (3) possédant une platine avant (3b) présentant des luminophores sur sa face arrière (3a) ;
un cadre métallique (2) ayant un bord arrière s'ajustant contre la périphérie de la face frontale de ladite platine avant (3b) ; et
une lentille acrylique (1) positionnée en avant dudit cadre métallique (2) ;
caractérisé par :
un revêtement (11) en un organo-polysiloxane sur la partie de ladite lentille (1) faisant face à ladite platine avant (3b) ; et
un adhésif siliconé (12) collé audit revêtement (11) et collant ladite lentille (1) à l'avant dudit cadre métallique (2).

**6.** Unité selon la revendication 5, dans laquelle l'espace (10) entre ladite lentille acrylique (1) et ladite platine avant (3b) est partiellement empli d'un réfrigérant liquide (CL).

**7.** Unité selon la revendication 5 ou la revendication 6, comprenant un moyen d'admission (2a) dans ledit cadre métallique (2) destiné à l'introduction d'un réfrigérant liquide (CL) dans ledit espace (10) entre ladite lentille acrylique (1) et ladite platine avant (3b).

**8.** Unité selon la revendication 5, la revendication 6 ou la revendication 7, comprenant également une pluralité de lentilles (21, 22) disposées en avant de ladite lentille acrylique (1) dans la direction de la projection lumineuse à partir dudit tube à rayons cathodiques (3).

**Patentansprüche**

**1.** Verfahren zur Fertigung einer Projektions-Kathodenstrahlröhren-Anordnung mit einer Vorderfläche (3b) der Kethodenstrahlröhre (3), auf welcher Bilder zur Projektion über ein Linsensystem erzeugt werden, umfassend
das Anbringen eines metallischen Rahmens (2) mit einer um die Peripherie der Vorderfläche (3b) angebrachten Hinterkante und einer mit Zwischenraum zur Hinterkante angeordneten Vorderkante zur Ausbildung eines Raumes (10) für die Aufnahme eines Kühlmittels und
die Verwendung einer Acryllinse (1) als Teil des Linsensystems, wobei diese Linse (1) eine rückwärtige Oberflache aufweist, die für die abdichtende Verbindung mit der Vorderkante des metallischen Rahmens angepaßt ist,
**gekennzeichnet** durch
das Aufbringen eines Organopolysiloxan-Überzugs (11) auf den Teil der hinteren Oberfläche der Linse (1), die mit der Vorderkante des metallischen Rahmens (2) in Kontakt kommen soll, und das anschließende Verbinden der Linse (1) mit dem metallischen Rahmen (2) mittels eines Silikonklebers (12).

**2.** Verfahren gemäß Anspruch 1, umfassend
das Trocknen der Linse (1) nach dem Aufbringen des Organopolysiloxan-Überzugs (11) bei im wesentlichen Raumtemperatur, das weitere Trocknen der überzogenen Linse (1) in einer Atmosphäre höherer Temperatur und
das Verbinden der so behandelten Linse (1) mit dem metallischen Rahmen (2) mittels des Silikonklebers (12) im Kontakt mit dem getrockneten Überzug (11) von dem Organopolysiloxan.

**3.** Verfahren gemäß Anspruch 1 oder 2, umfassend die zusätzliche Stufe des Einfüllens einer wässerigen Lösung von Ethylenglykol (CL) in den Zwischenraum (10).

**4.** Verfahren gemäß Anspruch 3, wobei der Raum (10) mit dem Kühlmittel (CL) unvollständig gefüllt ist, um eine thermische Expansion des Kühlmittels (CL) im Raum (10) zu ermöglichen.

**5.** Projektions-Kathodenstrahlröhren-Anordnung, umfassend:
eine Kathodenstrahlröhre (3), die eine Frontplatte (3b) mit Leuchtstoffen auf der rückwärtigen Seite (3a)

aufweist,
einen metallischen Rahmen (2) mit einer um die Peripherie der Vorderfläche von der Frontplatte (3b) angebrachten Hinterkante und
eine vor dem metallischen Rahmen (2) angebrachten Acryllinse (1),
**gekennzeichnet** durch
einen Überzug (11) aus einem organopolysiloxan auf dem Teil der Linse (1), der der Frontplatte (3b) gegenüberliegt, und
einen Silikonkleber (12), der an dem Überzug (11) anhaftet und die Linse (1) mit der Vorderseite des metallischen Rahmens (2) verbindet.

**6.** Anordnung gemäß Anspruch 5, wobei der Raum (10) zwischen der Acryllinse (1) und der Frontplatte (3b) teilweise mit einer Kühlflüssigkeit (CL) gefüllt ist.

**7.** Anordnung gemäß Anspruch 5 oder 6, wobei diese noch Einfüllmittel (2a) in dem metallischen Rahmen (2) aufweist, die zum Einfüllen einer Kühlflüssigkeit (CL) in den Raum (10) zwischen der Acryllinse (1) und der Frontplatte (3b) dienen.

**8.** Anordnung gemäß Anspruch 5, 6 oder 7, wobei diese außerdem mehrere Linsen (21,22) aufweist, die vor der Acryllinse (1) in Richtung der Lichtprojektion von der Kathodenstrahlröhre (3) angeordnet sind.

FIG. 1

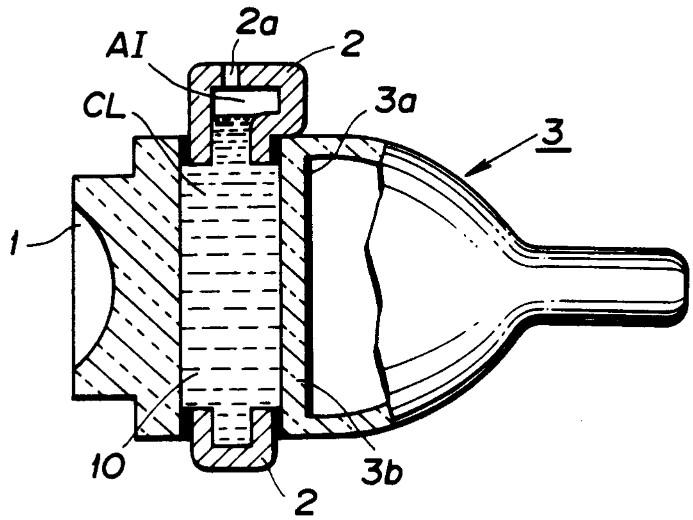


FIG.1A

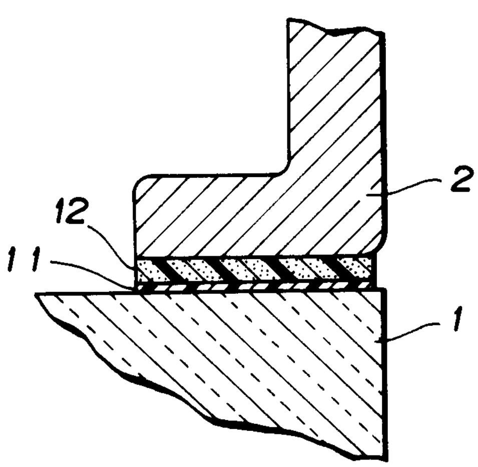

FIG.2

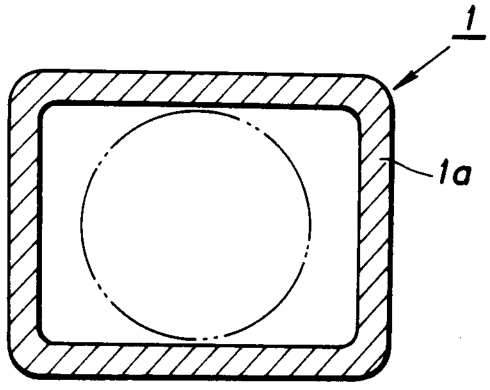


FIG.3